Europäisches Patentamt

European Patent Office

Office européen des brevets

(19)

(11) Numéro de publication : **0 047 700**
**B1**

(12) # FASCICULE DE BREVET EUROPÉEN

(45) Date de publication du fascicule du brevet :
**15.05.85**

(51) Int. Cl.⁴ : **A 01 C 11/02**

(21) Numéro de dépôt : **81401378.5**

(22) Date de dépôt : **03.09.81**

(54) **Machine automatique pour la plantation de plants en mottes.**

(30) Priorité : 05.09.80 FR 8019301

(43) Date de publication de la demande :
**17.03.82 Bulletin 82/11**

(45) Mention de la délivrance du brevet :
**15.05.85 Bulletin 85/20**

(84) Etats contractants désignés :
**AT BE CH DE GB IT LI LU NL SE**

(56) Documents cités :
EP-A- 0 016 892
DE-C-  849 197
FR-A- 1 408 269
FR-A- 1 567 790

(73) Titulaire : **ETABLISSEMENTS REGERO**
**16 rue d'Allemagne Fédérale Centre Commercial de**
**Gros Z.I.**
**F-44084 Nantes Cedex (FR)**

(72) Inventeur : **Piederriere, René**
**Rue du Moulin des Landes**
**F-44470 Sainte Luce Sur Loire (FR)**
Inventeur : **Bernard, Roger**
**1, rue de la Colinière**
**F-44300 Nantes (FR)**

(74) Mandataire : **Phélip, Bruno et al**
**c/o Cabinet Harlé & Phélip 21, rue de la Rochefou-**
**cauld**
**F-75009 Paris (FR)**

Jouve, 18, rue St-Denis, 75001 Paris, France

## Description

La présente invention concerne une machine automatique pour la plantation de plants en mottes.

On connaît depuis longtemps des machines pour la plantation de plants en mottes dans lesquelles un ou plusieurs hommes montés sur un châssis tracté, creusant des trous successifs ou un sillon dans le sol, placent à la main les plants dans ces trous ou sillon ; on connaît aussi de telles machines munies de dispositifs qui, entraînés à partir des roues du châssis comportent des nacelles ou des pinces dans lesquelles des manœuvres placent les plants individuels déposés ensuite dans des trous ménagés dans le sol par des goulottes appropriées. Toutes ces machines ne sont finalement que manuelles ou semi-automatiques puisque les plants ne viennent en position de plantation qu'après avoir été placés individuellement à la main dans les organes mécanisés servant à la plantation proprement dite. Dans le même genre semi-automatique, on connaît plus particulièrement une machine comportant des organes distributeurs à nacelles entraînées en rotation par les roues de la machine et synchronisés avec le déplacement rectiligne de courroies transporteuses des plants, posés au préalable à la main sur les courroies qui les amènent ensuite dans les nacelles.

Un dispositif plus récent a été proposé pour tenter d'automatiser effectivement toute la plantation à partir de plants mis en plateaux ; un homme seul est alors nécessaire (en plus du conducteur du tracteur) pour disposer les plateaux à l'entrée du mécanisme qui découpe les rangées de mottes, et les introduit sur des transporteurs d'où les mottes sont découpées une à une et introduites par un vérin dans un des planteurs solidaires d'une roue verticale ; ce planteur creuse le trou (et au besoin perce une feuille en matière plastique) dans lequel chaque motte est placée au cours de la rotation de la roue elle-même solidaire des roues motrices du tracteur. EP-A-0 016 892, publiée après la date de priorité de la présente demande et faisant partie de l'état de la technique selon l'Article 54(3), décrit une telle machine avec un sous-ensemble de séparation muni d'un cadre de réception avec vérin de poussée, un sous-ensemble de distribution avec les tapis transporteurs, et un élément planteur à l'extrémité de chaque transporteur.

Ces machines connues, lorsqu'elles nécessitent l'emploi de personnel pour « charger » les mottes successivement sur les transporteurs qui les placent directement dans des planteurs portés par une roue, ne sont pas entièrement automatiques, dans le dernier cas précité, la machine est bien automatique mais son utilisation est liée à de nombreux inconvénients ; en effet d'une part les couteaux de découpage des rangées et des mottes sont de dimensions fixes et ne sont pas réglables ce qui exige des mottes parfaitement homogènes et régulières dans leurs dimensions et difficiles à obtenir même avec les plus grandes précautions. Même alors des obstacles internes très petits suffisent pour détériorer plusieurs mottes lorsqu'ils sont rencontrés par les couteaux. D'autre part, les mécanismes d'entraînement des mottes et de mise en trou sont compliqués et relativement fragiles. Pour toutes ces raisons notamment, ce dispositif n'a pas été retenu par les utilisateurs.

FR-A-1 567 790 montre une machine automatique pour planter des plants en sillons à partir d'une plaque de mottes ; la plaque est amenée par un transporteur animé d'une avance pas-à-pas ; à l'extrémité de ce transporteur, la première rangée est versée sur un transporteur transversal au premier, la chute étant provoquée par un système de manivelles, qui appuient sur cette première rangée, la séparant du reste du plateau par cassure dans la zone de son plan de joint. Le deuxième transporteur déplace cette rangée séparée jusque vers un poste planteur, où un moyen solidaire du poste « casse » la première motte pour la placer dans la goulotte de chute du poste planteur.

L'invention s'est proposée de fournir une machine entièrement automatique de plantation de plants en mottes et dans laquelle les dimensions des mottes peuvent sans inconvénient varier de + ou − 20 %, tout en assurant des plantations régulières, soit en ligne soit en quinconce dans les sillons parallèles. L'idée de base de l'invention est de séparer les mottes et les rangées de mottes par cassure suivant des plans coïncidant avec, ou étant voisins des plants de joints des mottes (amorce de cassure) : on n'est donc plus tenu à essayer d'obtenir des tolérances précises — toujours coûteuses si elles peuvent être atteintes — dans les machines de fabrication des mottes. Lorsque l'on casse ainsi les rangées et les mottes pour les séparer respectivement des autres rangées et mottes, on a constaté qu'il était possible de réaliser une machine de plantation de plants en mottes totalement automatique et fiable, et beaucoup moins compliquée que les appareils proposés à ce jour.

Selon l'invention, la machine automatique pour la plantation de plants en sillons à partir de plaques de plants en mottes, comporte : un châssis sur roues tracté ou automoteur portant un certain nombre d'éléments planteurs alimentés à partir de plateaux de mottes, un sous-ensemble de séparation des plaques de mottes comprenant un cadre porté par le châssis pour recevoir successivement les plaques de mottes, un vérin pneumatique pour pousser chaque plaque dans le cadre où un autre vérin la centre, des vérins pneumatiques verticaux pour bloquer respectivement les deux premières rangées des mottes d'une plaque de mottes dans la position extrême du cadre où est située une cornière supportant la première rangée et apte à basculer autour d'un axe horizontal sous l'action d'un vérin pneumatique afin de séparer, par la rupture de leur liaison, la première rangée de mottes un sous-ensemble de distribution, dans laquelle la première rangée de mottes séparée est alors acheminée par un vérin pneumatique sur une cornière de réception, à partir de laquelle un vérin à câble muni d'un dispositif porte-rangée de mottes prend une rangée de mottes sur ladite cornière et la distribue par l'effet d'un vérin successivement à des tapis de transport, réputés libres ou non par des détecteurs de passage ; et enfin, à l'extrémité de chaque tapis de transport, un sous-ensemble de plantation avec l'élément planteur constitue d'un vérin-bras de préhension par doigts de la première motte séparant celle-ci de la suivante par rupture due à la traction, de leur liaison, ladite motte suivante étant immobilisée par serrage d'un vérin de blocage, la dépose au sol de la motte séparée s'effectuant au moyen d'une goulotte, le pas de plantation étant déterminé en fonction du déplacement de la machine, l'information étant donnée par un disque perforé solidaire de la roue directrice non motrice, du moyen tracteur, servant de référence.

Les divers moyens utilisés pour atteindre les buts de l'invention peuvent être pneumatiques, hydrauliques, électroniques et/ou mécaniques. Actuellement, il apparaît que la commande pneumatique soit particulièrement avantageuse.

On a décrit ci-après un exemple non limitatif d'une machine à planter selon l'invention, en se référant aux dessins annexés, dans lesquels :

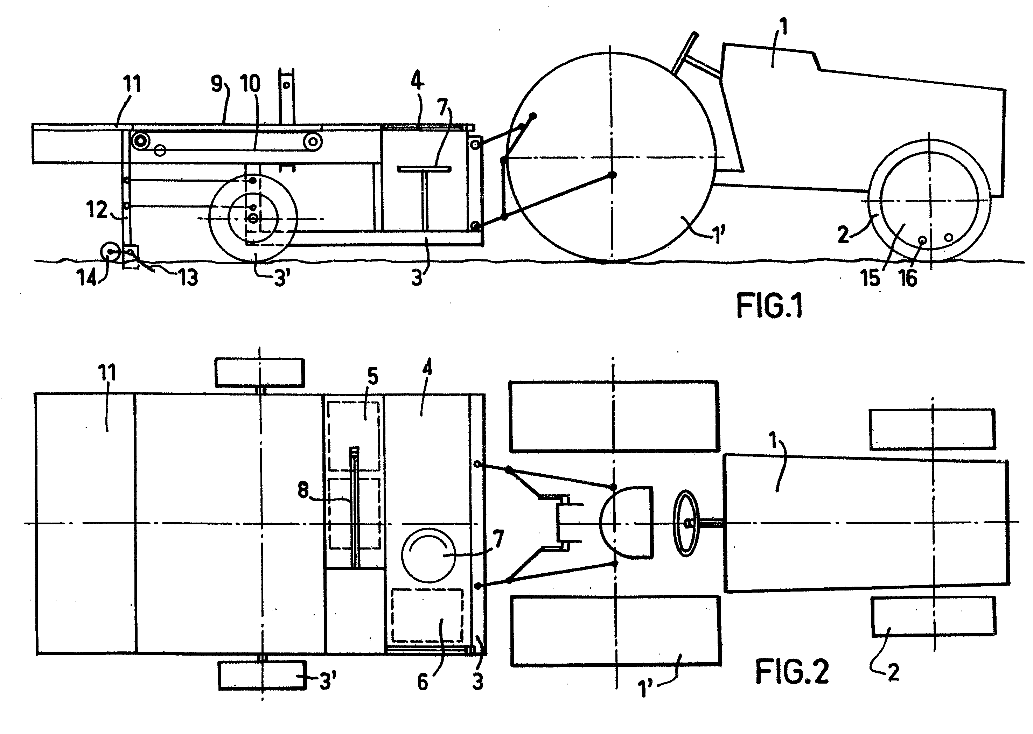

figure 1   est une vue latérale ;

figure 2   est une vue schématique par dessus d'une machine selon l'invention attelée à un tracteur et montrant la répartition des postes de la planteuse ;

figure 3   est une vue par dessus du montage sur table de la machine à cinq planteurs des figures 1 et 2 ;

figure 4   est une vue en coupe longitudinale du montage sur table de la figure 3 ;

figure 5   est une vue agrandie du sous-ensemble d'alimentation des mottes et de cassure des rangées successives ;

figure 6   représente le sous-ensemble de distribution des mottes aux différents postes planteurs ;

figure 7   est une vue en coupe d'un sous-ensemble correspondant à l'un des postes de plantation ;

figure 8   représente le mode d'action du vérin de cassure de la première motte à planter dans l'un des postes ;

figures 9 à 12   sont des grafcets du fonctionnement des différents sous-ensembles ;

figure 13   est le schéma des commandes pneumatiques intervenant pour une ligne de plantation d'indice i ;

figure 14   représente en plan un disque perforé déterminant les signaux de plantage ;

figure 15   représente le schéma des ordres de semis pair et impair ;

figure 16   montre la nature des impulsions ($2n$ par tour) en sortie du disque perforé, des diviseurs pair et impair, et vers les séquences côtés pair et impair et

figure 17   donne le schéma de la combinaison des sous-ensembles.

La machine de plantation à commande pneumatique qui est attelée à un tracteur 1 aux roues motrices 1' et roues directrices 2, comporte un châssis 3 sur roues 3' constitué :

1. d'un sous-ensemble 4 portant la réserve 5 des cageots de plaques de rangées de mottes, un emplacement 6 des cageots vides, un siège 7 pour le servant de l'appareil de plantation, et un dispositif 8 de séparation des rangées de mottes ;

2. d'un sous-ensemble 9 pour assurer la distribution des rangées de mottes vers chaque poste planteur par des transporteurs 10 ;

3. d'un sous-ensemble 11 assurant la plantation des mottes aux divers postes planteurs 12 à goulotte dont l'extrémité inférieure, ouverte sur le sol, présente vers l'aval (sens du déplacement du tracteur) une forme de soc 13 d'ouverture d'un sillon, et porte sur ses faces latérales deux roues plombeuses 14.

Le disque 15 perforé de n trous 16A destiné à assurer un écartement régulier entre les mottes plantées est monté ici sur l'une des roues directrices 2 qui porte également un détecteur pneumatique dont le rôle sera décrit plus loin en détail. Il y a lieu de noter que cette disposition du disque perforé sur une roue directrice entraîne l'avantage que le patinage éventuel des roues motrices n'a ainsi aucune action défavorable, tel que ratés ou bourrage de mottes au sol, sur le travail de plantation, puisque les roues directrices cessant alors de tourner, la plantation est simplement interrompue pour ne reprendre que lorsque la marche régulière du tracteur a repris :

1. Sous-ensemble de séparation 4.

Un cadre 16 est prévu sur le châssis à l'avant de la machine ; le servant y place une plaque 17 de mottes qu'il a extraite de son cageot 5. Un vérin 18 fixé sur le châssis agissant transversalement à la machine est destiné à pousser la plaque 17 dans le cadre 16 où elle est centrée par un vérin 19 ; dans le prolongement du cadre 16 est disposée une cornière pivotable 20 autour de son milieu $20_1$ sous l'action d'un vérin 21. La course de la plaque 17 est arrêtée par un contact 22 qui met en action pneumatique deux paires de vérins verticaux 23 et 24 destinés à bloquer la deuxième et la première rangée $17_2$ et $17_1$ de la plaque 17. Un vérin longitudinal 25 est prévu pour déplacer vers l'arrière de la machine la rangée $17_1$ de la plaque 17 lorsque après temporisation, le vérin 21 aura fait basculer la cornière 20 ce qui cassera sensiblement suivant les plants de joints de $17_1$ et $17_2$, la liaison entre ces deux premières rangées de mottes.

2. Sous-ensemble de distribution 9.

Dans le même plan que celui du cadre 16 est disposé un fer plat ou/cornière 26 s'étendant vers l'arrière du châssis et sur lequel la rangée $17_1$ (ou $17_n$) vient reposer sous l'effet du vérin 25. Associé à ce fer 26, un porteur 27 solidaire d'un vérin à câble 28 transversal et actionné par deux vérins $28_1$ permet de transporter en diverses positions, dont chacune correspond à l'élément planteur 11 de l'un des cinq transporteurs 10, la rangée $17_1$ ($17_n$) cassée à partir de la plaque 17. Chacun des transporteurs 10 comporte une bande continue de transport 29 entraînée entre deux parois verticales 29' par le moteur pneumatique 30 monté latéralement sur le châssis, sur laquelle le porteur 27 dépose l'une des rangées $17_n$ lorsque la place nécessaire sur la bande 29 est libre. Latéralement à la bande 29, il est prévu un détecteur pneumatique de passage 31. Au voisinage de l'extrémité amont de la bande 29 est disposé 32 de blocage de la première motte de la rangée $17_n$.

3. Sous-ensemble de plantation 11.

Dans le prolongement de chaque bande 29, il est monté un vérin de distribution 33 actionnant un vérin-doigts 34 qui vient saisir ladite première motte et l'entraîne, sous commande appropriée décrite ci-après, jusqu'au poste de plantation d'où elle tombe, sous commande appropriée décrite ci-après, dans le sillon creusé par la partie inférieure (goulotte) 12' dudit poste.

Une source d'air comprimé non représentée aux dessins est portée par le châssis et alimente par diverses canalisations le disque perforé 15, les différents vérins, un séquenceur principal et des séquenceurs secondaires, ainsi que les contacts nécessaires à la commande des différents vérins, du moteur 30 et des temporisations nécessaires.

Le fonctionnement de la machine est le suivant :

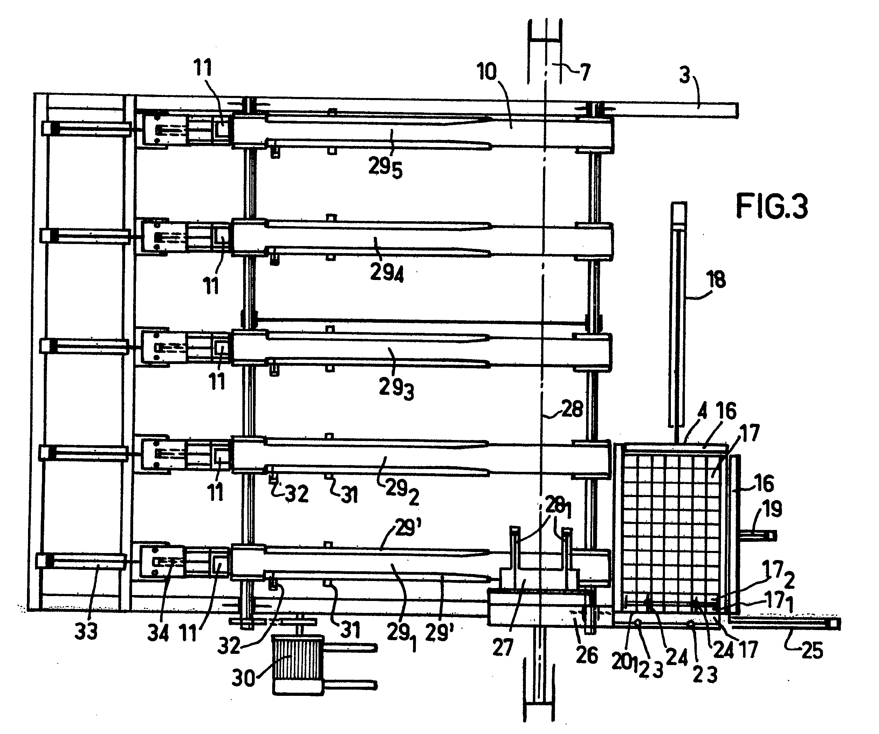

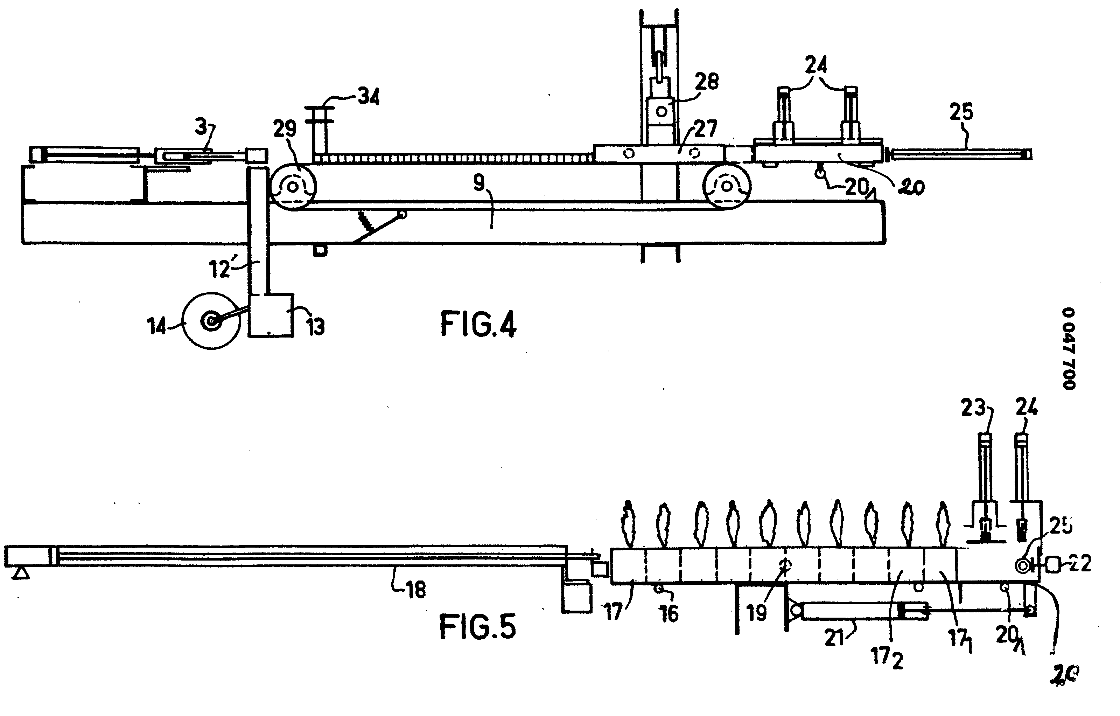

1. Séparation (figures 3 à 6 et 8).

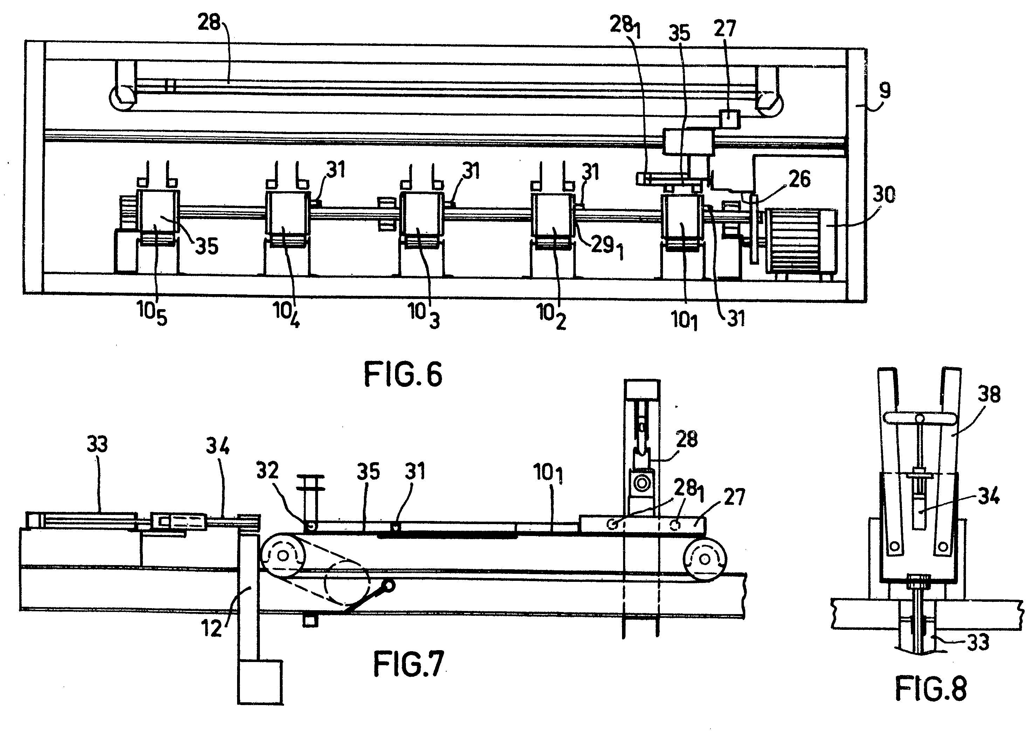

La planche ou plaque de mottes 17 est extraite de son plateau de stockage et mise en place, par l'opérateur ou servant dans le cadre 16. L'opérateur actionne une sécurité pneumatique bimanuelle M, à portée de sa main ce qui enclenche le cycle automatique ; le vérin 19 centre la plaque de mottes 17 sans le cadre 16 puis le vérin 18 pousse la plaque de mottes 17 vers la cornière de cassure 20 ; le contact de fin de course 22 en alimentation (fca) est actionnée au contact de la première rangée de mottes $17_1$, commande le retrait du vérin 18 en position d'attente, et le blocage des mottes de la première $17_1$ et de la deuxième $17_2$ rangée par les vérins 24 et 23. Une temporisation prédéterminée actionne le vérin de cassure 21 ; par basculement de la cornière 20, autour de son milieu $20_1$, ce vérin casse la première rangée de mottes $17_1$. Après cassure le vérin 25 pousse la rangée $17_1$ si la place est disponible (fcr) sur la cornière de réception 26, après retrait des vérins 24 et 23. Le dispositif se remet en position initiale par la rentrée de tige du vérin 25 et la remise en place du vérin 21, pour recevoir la deuxième rangée de mottes $17_2$, puis $17_3$ et ainsi de suite jusqu'à la dernière rangée $17_{10}$ où le contact de fin de course Ma+ (à l'arrière du vérin 18) ordonne le retrait du vérin 18 et du vérin 19 pour permettre l'alimentation d'une nouvelle plaque de mottes 17 par l'opérateur, et ainsi de suite, car le système de séparation est bouclé sur lui-même. On voit à la figure 8 le schéma correspondant aux diverses actions intervenues. On constate que si les mottes solidaires entre elles ne sont pas parfaitement identiques entre elles, le basculement de la cornière 20 assure sans difficulté aucune, une séparation nette des rangées $17_{n-1}$ et $17_n$ effectuée au voisinage de la ligne de joint des plants des deux rangées, résultat qui ne peut être obtenu avec les couteaux usuellement utilisés jusqu'à présent.

2. Distribution (figures 6, 7, 9 et 10).

Le vérin à câble 28 muni du dispositif porte-rangée des mottes 27 prend une rangée $17_1$ de mottes sur la cornière de réception 26 si cette rangée a été poussée par le vérin 25, sinon le vérin à câble 28 est bloqué en fin de course du vérin (fcv) en attente de l'alimentation de la cornière 26 par le vérin 25. Dès la prise d'une rangée, le vérin à câble 28 va distribuer sur le premier tapis $29_1$ en actionnant le capteur fin de course ligne 1 (fcl 1) si la place est disponible dans la réserve 35 pour une rangée complète de mottes : cette évaluation de la réserve de mottes intervient grâce au détecteur de passage 31 pneumatique sans contact délivrant un signal kl. L'action consécutive à ce signal kl sur un vérin extracteur 28, solidaire du dispositif porte-mottes 27 provoque le déchargement de la rangée des mottes sur le tapis $29_1$ et son entraînement par le moteur pneumatique 30 vers la réserve de mottes 35. Après la temporisation correspondant à l'évacuation de la rangée de mottes par le moteur 30, le cycle se poursuit, avec une autre rangée de mottes pour $29_2$, $29_3$, ... $29_5$ et ainsi de suite car le système est bouclé sur lui-même. Le décalage d'alimentation des tapis de ligne intervient grâce à un séquenceur pneumatique non représenté validant par décalage l'alimentation des fins de commande ligne (fcli) à partir de signaux ki.

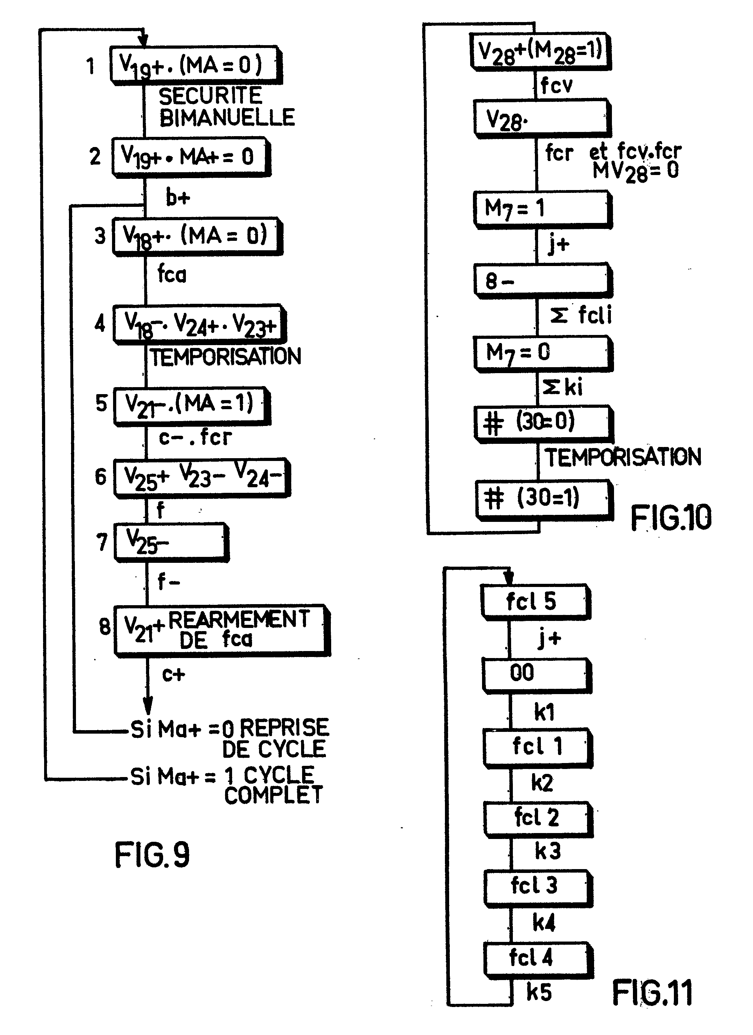

Le grafcet des 2 séquenceurs principal et de décalage est représenté aux figures 10 et 11.

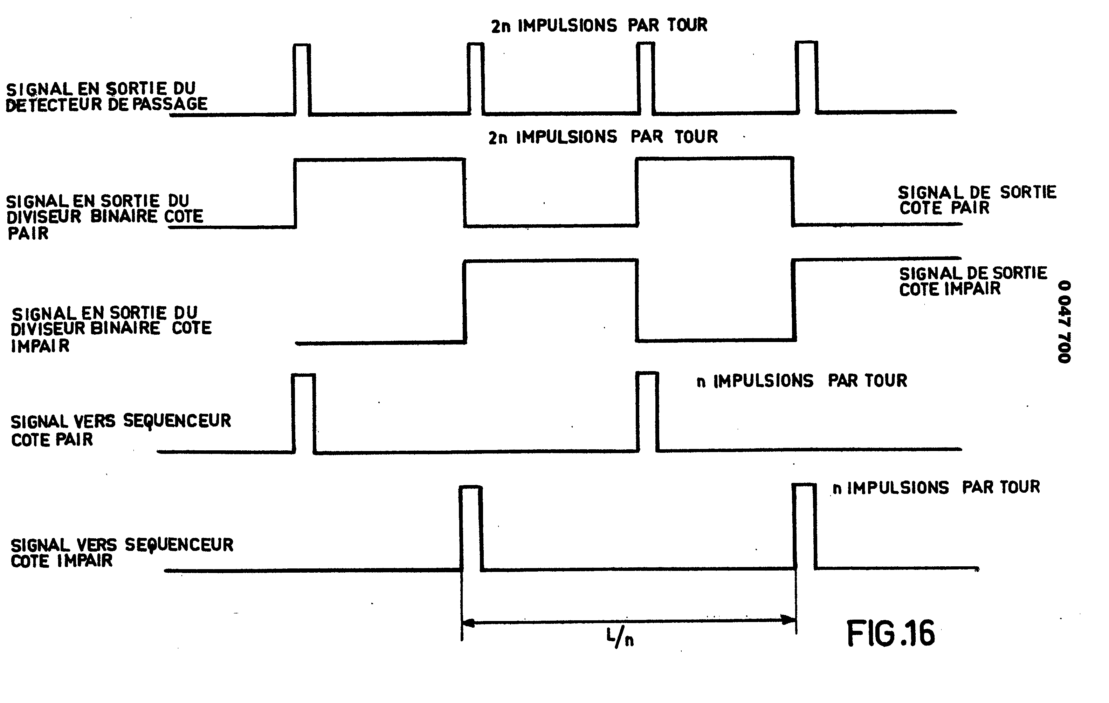

3. Plantation (figure 7, figure 8, figures 12 à 16).

A chaque extrémité amont d'un tapis 29 se trouve un vérin-bras 33 de préhension par vérin-doigts 34 d'une motte de la rangée $17_n$. Le bras 38 s'avance, doigts 34 ouverts, en direction d'une motte. Le vérin de blocage 32 de la première motte de la réserve se rétracte alors et laisse la première motte s'engager entre les doigts 34. Il bloque aussitôt après l'avant-dernière motte. Les doigts 34 se referment alors et le bras 33 se rétracte en séparant par simple traction la première motte de la suivante. Le vérin-doigts 34 attend alors l'ordre de semis, correspondant au rang i et à l'espacement adéquat par rapport à la motte plantée précédemment, envoyé à partir du disque perforé.

Le dispositif de commande d'espacement et de plantation en quinconce est obtenu à partir d'un détecteur de passage associé au disque 15, perforé de trous et solidaire d'une des roues directrices et un intervalle choisi adéquat entre deux perforations successives (angle $\alpha$) correspond donc à l'espacement entre deux mottes plantées successivement dans le sol : si la longueur développée de la roue directrice est L et si 2n trous sont ménagés dans le disque perforé, on obtient n signaux pairs et n signaux impairs (« en quinconce ») ; chacun des signaux sur une ligne paire ou impaire détermine un espace L/n sur une ligne paire ou impaire déterminée ; L/n est l'espace de plantation entre deux mottes : le détecteur de passage de type connu par exemple sous la désignation commerciale Compair Climax France délivre ses informations à un diviseur binaire (distributeur monopilote de type connu, par exemple de Marton-Air®) qui fournit en sortie ses informations en quinconce sur une ligne dite de rang pair puis sur une autre dite de rang impair : ce sont ces ordres qui commandent les ouvertures successives et ordonnées de vérins 34C dans le séquenceur dont le grafcet apparaît en figure 11.

Pour changer l'espacement de plantation dans la ligne, il suffit de changer le disque perforé. Pour planter en ligne il suffit d'obturer une des sorties du diviseur par 2 et de raccorder les orifices de pilotage correspondant à l'autre sortie du diviseur par 2, ou de « shunter » le diviseur par 2 et d'utiliser un disque comportant 2 fois moins de perforations.

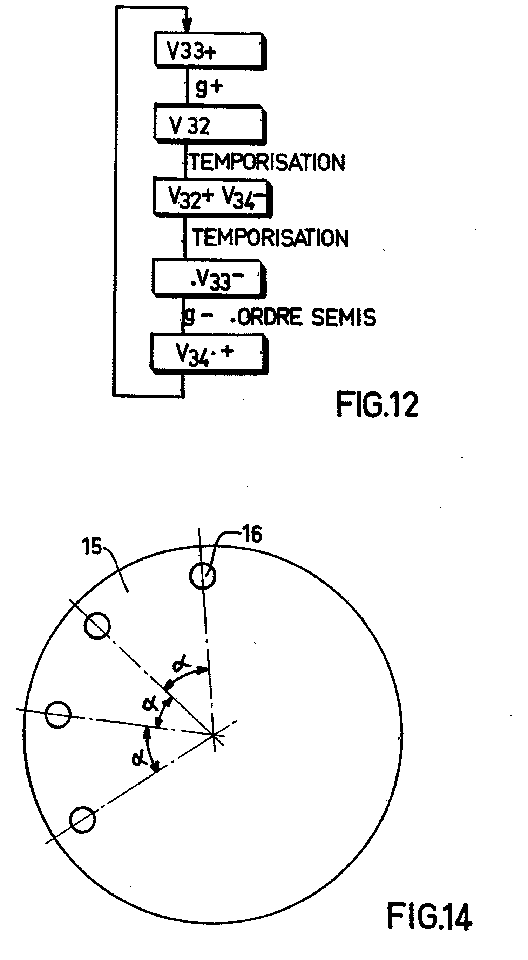

Le grafcet des lignes paires ou impaires et les schémas correspondant à une ligne i et à une ligne paire ou impaire sont représentés aux figures 12 à 15.

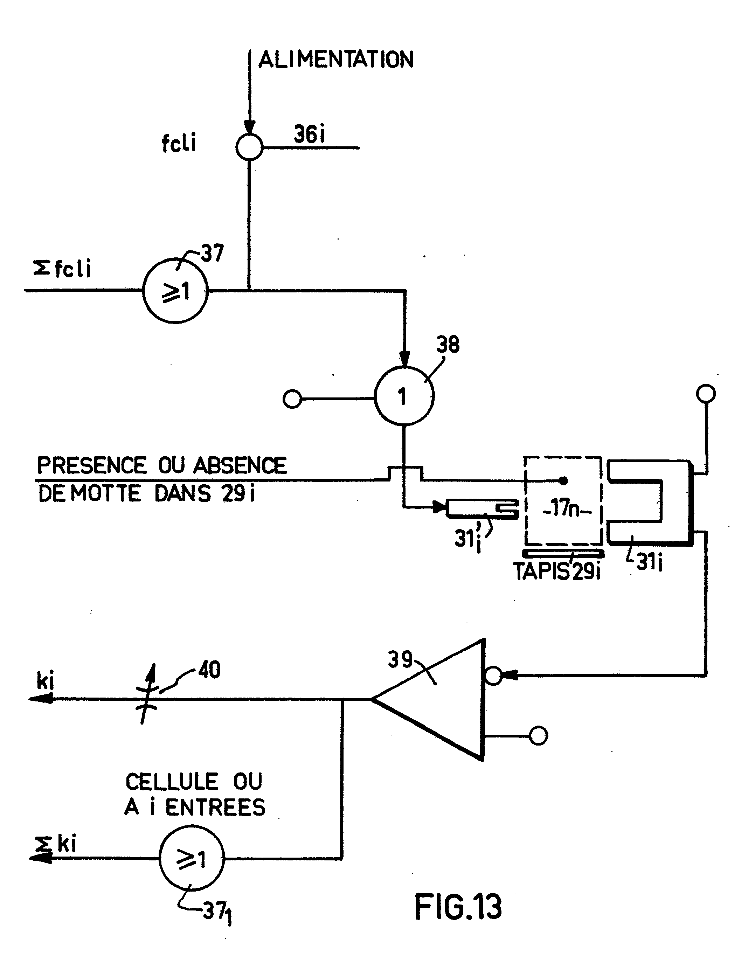

Au schéma de figure 13 on voit comment est assurée la réalisation du semis sur l'une des lignes i des sillons de plantation. L'air venant du séquenceur de décalage non représenté est débité par le contacteur (fcli) actionné par le bras 36i de la ligne i rencontrant le support de rangée 27 lors de son déplacement par le vérin à câble 28 ; l'air passe ensuite dans une cellule OU 37 à i entrées qui fournit au séquenceur principal non représenté, la somme issue des contacteurs (fcli), traverse une cellule « OUI » 38 de régénération recevant une pression du réseau et qui alimente le gicleur de commande 31' du détecteur de mottes 31 de la ligne en cause signalant la présence ou l'absence de mottes dans le transporteur 29i ; le détecteur est alimenté à la pression de réseau. Du détecteur, l'air est conduit à un amplificateur négatif 39 alimenté par le réseau et d'où l'air gagne d'une part le séquenceur de décalage ki avec interposition d'un retard de transmission 40 et d'autre part une cellule OU $37_1$ à i entrées débitant dans le séquenceur principal des sommes $\Sigma$ (fcli).

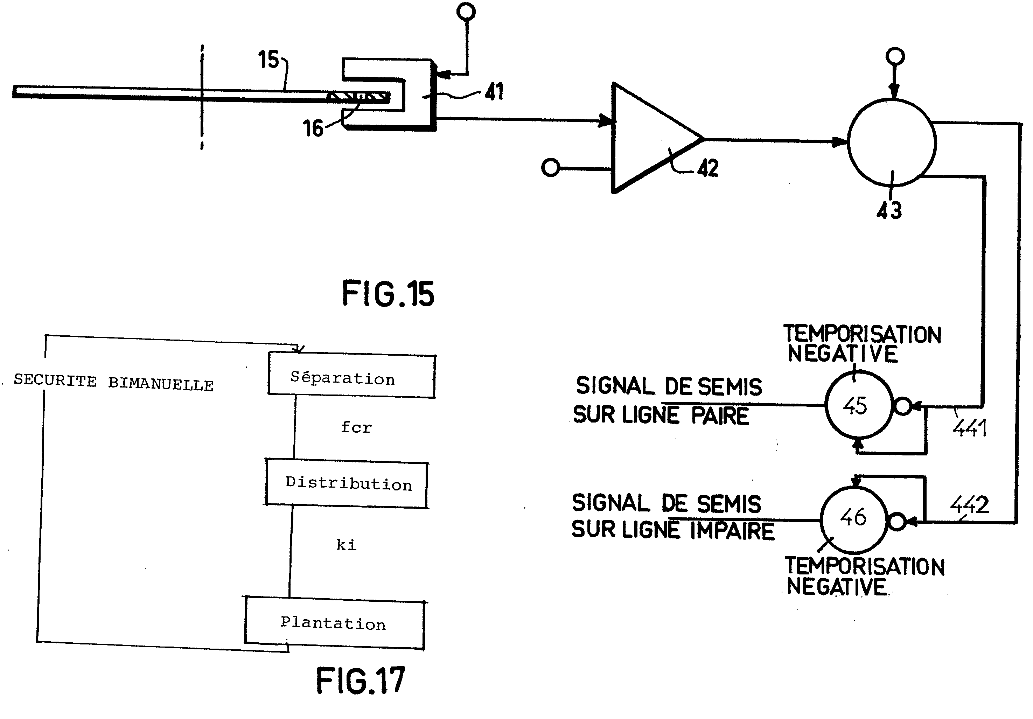

La figure 15 représente le schéma des ordres de semis aux postes planteurs « pair » et « impair » : les perforations 16 du disque 15 défilent dans le détecteur de passage 41 (à pression de réseau) ; l'air issu de 41 traverse un amplificateur positif 42 (recevant une pression de réseau) puis un diviseur binaire 43 (recevant une pression de réseau) d'où deux lignes $44_1$ et $44_2$ aboutissent respectivement à un temporisateur négatif 45 donnant le signal de semis (au vérin 34) sur les lignes paires (le signal pair va vers le séquenceur pair) et à un temporisateur négatif 46 donnant le signal de semis sur lignes impaires (vérin 34, le signal allant vers le séquenceur impair).

Le mode de plantation retenu est celui de l'ouverture d'un sillon continu ; la dépose de la motte 17 sur le sol par la goulotte 12' à soc 13 réalise la plantation de la motte.

Des roues plombeuses 14 terminent le travail et permettent d'assurer une bonne liaison des deux flancs et du fond de la motte avec le sol, conditions requises pour une bonne reprise du plant et l'homogénéité de la taille de la population des plants d'une même parcelle.

La combinaison des sous-ensembles 1 à 3 correspond ainsi au schéma d'ensemble de la figure 17.

En cas d'arrêt d'urgence, la cornière 20 se remet en position d'alimentation par opérateur, le vérin 23 et le moteur 30 restent en l'état par coupure de la pression du réseau. La sécurité bimanuelle doit alors être actionnée à nouveau pour commander la remise en pression progressive de l'installation et le redémarrage de la machine.

Sur un signal de l'opérateur servant ou sur son initiative, le conducteur de la machine peut arrêter la plantation à tout moment ; le moteur 30 s'arrête instantanément, le vérin 23 et la cornière 20 s'arrêtent automatiquement après ordre donné respectivement par ki et fcr ; la machine redémarre alors automatiquement à l'initiative du conducteur.

En conclusion, il est bien clair que la machine planteuse selon l'invention est effectivement automatique et qu'elle a des mécanismes simples avec l'avantage d'être affranchie des variations normales de dimensions de la motte choisie (± 20 % selon les trois axes) et de bénéficier du plan de séparation préférentielle existant entre les mottes (une mémoire du plan de joint, en quelque sorte) qui aide à les séparer par cassure (mouvement de rotation) ou par traction (mouvement de translation) sans exiger des couteaux qui sont rigides et non réglables en position.

On peut prévoir autant de rangs réglables en largeur que nécessaire, on peut planter en ligne ou en quinconce à des espacements réglables par simple changement d'un disque perforé, indépendamment de la vitesse d'avance du tracteur (dans les limites de la machine, évidemment).

Enfin, la machine peut être aussi compacte qu'on le désire et être rendue automotrice pour l'utiliser en serre.

Il y a encore lieu de noter que, pour éviter de devoir changer de disque perforé pour modifier les espacements, on peut au besoin utiliser les distances périphériques entre trous pour alimenter un compteur à présélection fixant directement l'espacement entre plants.

Enfin, on peut en combinaison ou non avec les vérins-doigts preneurs de mottes, prévoir sous la commande des ordres émis à partir du disque perforé, des trappes rétractables ouvrant ou fermant le passage dans la goulotte 12'.

## Revendications

1. Machine automatique pour la plantation de plants en sillons à partir de plaques de plants en mottes, comportant : un châssis (3) sur roues (3') tracté ou automoteur portant un certain nombre d'éléments planteurs (12) alimentés à partir de plateaux de mottes (17) ; un sous-ensemble de séparation (4) des plaques de mottes (17) comprenant un cadre (16) porté par le châssis (3) pour recevoir successivement les plaques de mottes (17), un vérin pneumatique (18) pour pousser chaque plaque dans le cadre (16) où un autre vérin (19) la centre, des vérins pneumatiques verticaux (23, 24) pour bloquer respectivement les deux premières rangées des mottes $(17_1, 17_2)$ d'une plaque de mottes (17) dans la position extrême du cadre où est située une cornière (20) supportant la première rangée et apte à basculer autour d'un axe horizontal (20.1) sous l'action d'un vérin pneumatique afin de séparer, par la rupture de leur liaison, la première rangée de mottes (17.1) de la seconde (17.2) ; un sous-ensemble de distribution (9) dans laquelle la première rangée de mottes séparée (17.1) est alors acheminée par un vérin pneumatique (25), sur une cornière de réception (26) à partir de laquelle un vérin à câble (28) muni d'un dispositif porte-rangée de mottes (27) prend une rangée de mottes sur ladite cornière et la distribue par l'effet d'un vérin (28.1) successivement à des tapis de transport (29.1, 29.2, 29.3, 29.4, 29.5) réputés libres ou non par des détecteurs du passage (31.1, 31.2, 31.3, 31.4, 31.5) ; et enfin, à l'extrémité de chaque tapis de transport (29), un sous-ensemble (11) de plantation avec l'élément planteur (12) constitué d'un vérin-bras (33) de préhension par doigts (34) de la première motte séparant celle-ci de la suivante par rupture due à la traction, de leur liaison, ladite motte suivante étant immobilisée par serrage d'un vérin de blocage (32), la dépose au sol de la motte séparée s'effectuant au moyen d'une goulotte (12'), le pas de plantation étant déterminé en fonction du déplacement de la machine, l'information étant donnée par un disque perforé (15) solidaire de la roue directrice (2) non motrice, du moyen tracteur, servant de référence.

2. Machine selon la revendication 1, caractérisée en ce que les ordres de semis émanant du disque perforé agissent directement sur des trappes rétractables ouvrant ou fermant les goulottes.

## Claims

1. Automatic machine for planting plants into furrows from slabs of plants with root balls, including : a chassis (3) on wheels (3'), tractor-drawn or self-propelled, carrying a certain number of planter elements (12) fed from slabs of root balls (17), a sub-assembly (4) for separating the slabs of root balls (17) including a frame (16) carried by the chassis (3) to successively receive the slabs of root balls (17), a pneumatic jack (18) to push each slab into the frame (16) where another jack (19) centers it, vertical pneumatic jacks (23, 24) to respectively clamp the first two rows of root balls $(17_1, 17_2)$ of a slab of root balls (17) in the endmost position of the frame at which position is located an angle iron (20) supporting the first row and capable of rocking about a horizontal spindle (20.1) under the action of a pneumatic jack in order to separate, by the breaking of their join, the first row of root balls (17.1) from the second (17.2) ; a distribution sub-assembly (9) in which the first row of separated root balls (17.1) is then taken by a pneumatic jack (25) onto a receiving angle iron (26) from which a cable jack (28) fitted with a device for carrying rows of root balls (27) takes one row of root balls from the said angle iron and distributes it by means of a jack (28.1) successively to conveyor belts (29.1, 29.2, 29.3, 29.4, 29.5) noted as free or not free by passing detectors (31.1, 31.2, 31.3, 31.4, 31.5) ; and finally, at the end of each conveyor belt (29) a planting sub-assembly (11) with the planter element (12) formed from a jack-arm (33) for gripping with fingers (34) the first root ball and separating it from the next one by breaking their join by traction, the said next root ball being immobilized by a clamping jack (32), the placing of the separated root ball on the ground being carried out by means of a chute (12'), the planting interval being determined according to the displacement of the machine, the information being given by a perforated disk (15) integral with the non-driving steering wheel (2) of the means of traction serving as a reference.

2. Machine according to Claim 1, characterized in that the sowing orders coming from the perforated disk act directly on the retractable flaps opening or closing the chutes.

## Patentansprüche

1. Automatische Maschine zum Einpflanzen von Pflanzen in Furchen, ausgehend von Pflanzenballenplatten, umfassend : ein Chassis (3) auf Rädern (3'), gezogen oder selbstfahrend, das eine bestimmte Anzahl von Pflanzerelementen (12) trägt, die, ausgehend von Ballenplatten (17), gespeist werden ; eine Trennungsbaugruppe (4) der Ballenplatten (17) mit einem von dem Chassis (3) getragenen Rahmen (16) zum sukzessiven Aufnehmen der Ballenplatten (17) ; einen Hydraulikarbeitszylinder (18) zum Schieben jeder Platte in den Rahmen (16), wo ein weiterer Arbeitszylinder (19) sie zentriert ; pneumatische, vertikale Arbeitszylinder (23, 24) zum Blockieren jeweils der beiden ersten Reihen von Ballen ($17_1$, $17_2$) einer Ballenplatte (17) in der Extremposition des Rahmens, wo sich ein die erste Reihe abstützender Winkelstahl (20) befindet, der um eine Horizontalachse (20.1) unter der Wirkung eines Pneumatikarbeitszylinders verschwenken kann, um durch Aufbrechen der Verbindung die erste Reihe von Ballen (17.1) von der zweiten (17.2) zu trennen ; eine Verteilungsbaugruppe (9), in der die erste Reihe von abgetrennten Ballen (17.1) dann von einem pneumatischen Arbeitszylinder (25) auf einen Aufnahmewinkelstahl (26) dirigiert wird, ausgehend von welchem ein Kabel (28)-Arbeitszylinder, versehen mit einer Ballenreihentragevorrichtung (27) eine Ballenreihe auf den genannten Winkelstahl nimmt und unter der Wirkung eines Arbeitszylinders (28.1) sukzessiv auf Transportbänder (29.1, 29.2, 29.3, 29.4, 29.5) verteilt, die sperrbar bzw. entsperrbar sind durch Passagedetektoren (31.1, 31.2, 31.3, 31.4, 31.5) ; und schließlich am Ende jedes Transportbandes (29) eine Pflanzbaugruppe (11) mit dem Pflanzerelement (12), bestehend aus einem Lenker-Arbeitszylinder (33) der Übernahme mittels Fingern (34) des ersten Ballens unter Abtennung desselben von dem folgenden durch Aufbrechen, infolge des Zuges, ihrer Verbindung, wobei der genannte folgende Ballen stillgesetzt wird durch Festlegen eines Blockierarbeitszylinders (32), wobei das Absetzen des abgetrennten Ballens auf dem Boden mittels einer Schurre (12') erfolgt, der Pflanzabstand bestimmt wird in Abhängigkeit von der Bewegung der Maschine und die Information gegeben wird durch eine perforierte Scheibe (15), die mit dem nicht angetriebenen Lenkrad (2) der Zugmittel, das als Referenz dient, verbunden ist.

2. Maschine nach Anspruch 1, dadurch gekennzeichnet, daß die Pflanzordnungen, herrührend von der perforierten Scheibe, direkt auf rückziehbare Fallen einwirken, welche die Schurren öffnen oder schließen.

FIG.1

FIG.2

0 047 700

FIG.3

FIG.4

FIG.5

FIG.6

FIG.7

FIG.8

FIG.9

FIG.10

FIG.11

FIG.12

FIG.14

FIG.13

**FIG.15**

TEMPORISATION NEGATIVE — SIGNAL DE SEMIS SUR LIGNE PAIRE

TEMPORISATION NEGATIVE — SIGNAL DE SEMIS SUR LIGNE IMPAIRE

SECURITE BIMANUELLE

Séparation — fcr — Distribution — ki — Plantation

**FIG.17**

**2n IMPULSIONS PAR TOUR**

SIGNAL EN SORTIE DU
DETECTEUR DE PASSAGE

**2n IMPULSIONS PAR TOUR**

SIGNAL EN SORTIE DU
DIVISEUR BINAIRE COTE
PAIR

SIGNAL DE SORTIE
COTE PAIR

SIGNAL DE SORTIE
COTE IMPAIR

SIGNAL EN SORTIE DU
DIVISEUR BINAIRE COTE
IMPAIR

**n IMPULSIONS PAR TOUR**

SIGNAL VERS SEQUENCEUR
COTE PAIR

**n IMPULSIONS PAR TOUR**

SIGNAL VERS SEQUENCEUR
COTE IMPAIR

$L/n$

FIG.16

0 047 700